# EUROPEAN PATENT APPLICATION

(11) **EP 1 306 008 A1**
(43) Date of publication of application: **02.05.2003**
(21) Application number: 01125218.6
(22) Date of filing: 24.10.2001
(51) Int. Cl.: A01N 63/02

(54) **Composition for treatment against mosquito larvae and process for its preparation**

(71) Applicant: Natural Bio Technology Co., Teheran 15548-15616 (IR)
(72) Inventor: Moazami, Nasrin, Dr., Teheran 15548-15616 (IR)
(74) Representative: Gille Hrabal Struck Neidlein Prop Roos

(57) **Abstract**

The invention relates to inseticidal compositions comprising an insecticide from Bacillus thuringiensis. The invention also relates to a process for the preparation of formulations of such compositions and the use of the insecticidal compositions for the control of mosquito larvae.

The composition of the invention comprises an insecticidal component derived from the strain Bacillus thuringiensis M-H-14, a carrier component, a component for the protection against sun-light and optionally feeding filler and excipients. The insecticidal component from Bacillus thuringiensis M-H-14 is a delta-endotoxin produced by the microorganism when in a state of dying. The carrier of the invention is of plant material like peat, corn cobs, corn grain, wheat strain, cork and palm seed grain.

The method for the preparation of the insecticidal component comprises the steps of fermenting Bacillus thuringiensis M-H-14 in a fermentation reactor until completion of sporulation, separating the solid components from the fermentation reactor by centrifugation to obtain a concentrated solution called concentrated cream, spray drying the concentrated cream to obtain a wettable powder on diluting the concentrated cream with an aqueous solution to obtain a pourable aqueous solution.

## Description

The invention relates to insecticidal compositions comprising an insecticide derived from *Bacillus thuringiensis.* The invention also relates to a process for the preparation of formulations of such compositions and the use of such insecticidal compositions for the control of Anopheles and culex species.

There is considerable commercial interest in insecticidal compounds which exhibit insecticidal activity against target insects after the compound has been ingested by the target insect, especially ingestible biological products with insecticidal activity. Microorganisms such as viruses and bacteria and certain products made by or within viruses or bacteria are examples of ingestible biological insecticides currently used to combat harmful insects.

Apart from synthetic insecticides and those obtained from higher plants, bacterial insecticides have been disclosed.

The most widely used ingestible biological insecticide is connected with the bacterium *Bacillus thuringiensis,* of which many varieties are known. The species which has been particularly well investigated is *Bacillus thuringiensis* H-14 (israelensis). This species *Bacillus thuringiensis* H-14 (israelensis) has been widely used as a source for biological insecticidal products. Not only the microorganism itself may be used, but also products made by or within this bacterial species and in particular the toxin which is produced by the members of the species.

Ingestible biological insecticides have several advantages over conventional chemical insecticides such as being relatively non-toxic and non-pathogenic to non-target organisms such as humans.

Commercial preparations of *Bacillus thuringiensis* are used worldwide for biological control of harmful insects. The advantages of these bacterial insecticides are that they are highly selective for a very limited range of target insects and are biodegradable.

*Bacillus thuringiensis* is a rodshaped, aerobic, spore forming bacterium. It is uniquely characterized by the production during the sporulation process of one or more inclusions, referred to as parasporal crystals. These crystals are composed of high molecular weight proteins, referred to as delta-endotoxin proteins (hereafter mentioned delta-endotoxins). The delta-endotoxins are the active ingredient in available commercial preparations of *Bacillus thuringiensis.* The pathogenicity of *Bacillus thuringiensis* essentially originates from the toxicity of the crystal protein. The crystal protein acts as a stomach poison for insects and is called delta-endotoxin.

Many *Bacillus thuringiensis* strains with different insect host spectra have been identifed. They are classified into different subspecies based an their flagellar antigens. Of particular interest are *Bacillus thuringiensis* subspecies kurstaki and subspecies aizawai, used for the control of lepidopteran pest insects, *Bacillus thuringiensis* subspecies Israelensis used for the control of dipteran pest insects and Bacillus thuringiensis subspecies tenebrionis used for the control of coleopteran pest insects.

Recently, new subspecies of *Bacillus thuringiensis* have been identified, and genes responsible for active delta-endotoxins have been isolated (Hofte, H., H.R. Whiteley (1989) Microbiological Reviews 52(2): 242-255). Hofte and Whiteley classified *Bacillus thuringiensis* crystal protein genes into four major classes, these classes were Cry I (Lepodoptera-specific), Cry II (Lepidoptera- and Dipteraspecific), Cry III (Coleoptera-specific), and Cry IV (Deptera-specific). The discovery of strains specifically toxic to other insects has been reported. (Feitelson, J.S., J. Payne, L. Kim [1992] Bio/Technology 10: 271-275). Cry V has been proposed to designate a class of toxin genes that are nematodespecific.

Regular use of chemicals against unwanted organisms can select for chemical resistant strains. Chemical resistance occurs in many species of economically important insects.

The parasporal crystals are composed of glycoproteins with molecular weights of about 120,000. The protein molecules are covalently bonded together in the crystal by disulfide bridges: at neutral pH values the crystals are insoluble in aqueous solutions and organic solvents. In the alkaline pH range, above pH 9.0 they dissolve, with the crystal protein being cleaved into smaller soluble peptides with molecular weights between about 23,000 and 70,000. The peptides which are produced in this way include the active toxin.

The delta-endotoxins differ from other substances which are toxic for insects by being very toxic for sensitive insect larvae and having pronounced specificity, which means that they are not toxic for other organisms, especially mammals. Their chemical structure leads to the expectation that they can undergo biodegradation without leaving residues.

In 1977, isolates of *Bacillus thuringiensis*, the delta-endotoxins of which are toxic for diptera larvae and which were subsequently called A 60, and *Bacillus thuringiensis* israelensis (BTI) have been described.

*Bacillus thuringiensis* israelensis was isolated from a breeding site of culex pepiens complex mosquitoes (Goldberg and Margalit, [1977] Mosq. News 37: 355-358). This strain was found in a desert area in Israel.

In 1986 from dead Anophele stephensi larvae in a larval habitat located in the Lorestan province of Iran, a further sporulated bacterium has been isolated which rapidly displays a high larvicidal power against the mosquitoes such as Anopheles and culex species. Bioassays performed indicated that different species of Anopheles and culex were sensitive. This bacterium was identified to be a genus of Bacillus. Further typing confirmed the isolated strain to be *Bacillus thuringiensis* H-14 which were named *Bacillus thuringiensis* M-H-14.

The production of endospores in bacilli generally begins in the stationary phase of growth. It may be regarded as a reaction to the fact that the substrates which can be utilized by the cell have become exhausted, and thus the living conditions have deteriorated. Vegetative cells are biochemically active, able to divide and sensitive to heat and desiccation. In contrast, endospores have a considerable resistance to heat and desiccation, but are biochemically inactive and cannot divide. They represent a resting stage, which may persist for decades. This resting state is terminated when the spore comes into contact with substrates which permit multiplication, eg. a nutrient solution in the laboratory. This entails the spore, in a process called germination, being converted into a vegetative cell. During spore formation, called sporulation hereinafter, considerable morphological changes take place in the sporulating cell.

For the purpose of the present patent application the new strain of *Bacillus thuringiensis* serotype H-14 which produces high amounts of delta-endotoxin has been deposited with the Persian type culture collection (PTCC), Biotechnology MIRCEN. Tehran 15819, IRAN.
The deposition date is 10 September 1989 and the PTCC designation M-H-14 PTCC - 1632.

The microorganism has further been deposited at the Deutsche Sammlung von Mikroorganismen und Zellkulturen GmbH under the deposition no. 14.

Despite the advantages of ingestible biological insecticides, they also have several disadvantages which limit their effectiveness. Among these disadvantages are low stability in the presence of decomposing organic matter and low site-persistence. For example, typical commercial products employed against mosquito larvae containing *Bacillus thuringiensis* var. israelensis and the high density insecticidal crystalline protein produced by this organism are not always effective when used in an aqueous environment to kill and control mosquito larvae because these products tend to have a high bulk density and often sink in the water to depths below the mosquito larvae feeding zone. In addition, many biological insecticides, for example the delta-endotoxins of *Bacillus thuringiensis* display a limited site- persistence since they are not stable to chemical and/or physical degradation, when exposed to various environmental factors such as ultraviolet light and heat.

Persistence and residual activity may be enhanced by formulation techniques. Some specially made slow-release formulations have been found to yield persistent release and control of larvae (Lacey, Urbina, and Heitzman 1984). However no such formulations, with the exception of briquettes (used in specific situations), have been prepared commercially and tested under field conditions. The potential for slow-release formulations looks good under field conditions and this area of development activity requires a great deal of interdisciplinary research.

Despite the larvicidal activity of commercial formulations, limited interest in control of Anopheline vectors, due to rapid decline in effectiveness, is observed.

Various preparations and formulations of *Bacillus thuringiensis* M-H-14 have been field tested against Anophele stephensis and culex pipiens. Among the tested formulations, slow release formulations in the form of granules with high toxicity have been obtained which showed a high activity against malaria mosquito vectors.

Although *Bacillus thuringiensis* M-H-14 lacked recycling and does not provide persistent control, the usefulness of its slow release formulations has been established in an integrated approach toward the control of Anophele stephensis.

In order to increase the site persistence and/or stability of biological insecticides, these insecticides have been adsorbed onto latex beads ( Sehnell, D.J., Science [1984] 223: 1191) or were encapsulated with lactones (EP - A - 0 145 087) or polyethylene (Margalit, J. et al., Appl. Microbial. Biotechnol., 1984; 19: 382-383).

Field research data obtained to date indicate that most commercial formulations (powdered or solutions) of *Bacillus thuringiensis* israelensis, yield high levels of initial control, but its effectiveness declines rapidly.

While encapsulation is effective in achieving some of the above stated goals, many prior art methods of encapsulation involve the use of harsh treatment procedures such as the use of organic solvents and/or heat. Biological insecticides in general are sensitive to such harsh treatments and can lose substantial activity when these treatment procedures are employed.

It would be desirable to have a biological insecticidal composition containing a biological ingestible insecticide that has increased stability and site-persistence. It would also be desirable to have a process for preparing such insecticidal composition which avoids the use of the afore mentioned harsh encapsulation procedures.

In mosquito control programs, specially those using biological control agents, it is highly desirable to have materials and agents that will yield long-lasting control with one or few treatments. The reason for this demand is the high cost of application (including cost of administration, technical services, surveillance, and application equipment), which usually accounts for five to ten times the cost of the material itself. Therefore, those agents that persist or recycle in the treated habitat and provide satisfactory control of larvae over prolonged periods are greatly desired.

It is a first object of the present invention to provide compositions for the treatment of mosquito breeding sites which display a good, long lasting activity and are stable under natural conditions.

It is a further object of the invention to provide a process for the preparation of the compositions for the treatment of mosquito breeding sites according to the first aspect of the invention.

The first object of the invention to provide a composition with improved efficacy and stability has been solved by providing a composition for the treatment of water against mosquito larvae, comprising as the active ingredient a bactericidal component derived from *Bacillus thuringiensis* M-H-14, a carrier component, a component for the protection against sun-light and optionally feeding filler and excipients.

As used herein, the term "ingestible insecticidal composition" means a composition which has such physical characteristics, as for instance a sufficiently small particle size, that the composition is capable of being ingested by the target insect and that the insecticide contained in the composition exhibits its insecticidal activity after ingestion by the target insect.

The term "insecticide" or "ingestible insecticide" refers to insecticides which exhibit their insecticidal activity after ingestion by the target insect.
The term, "insecticidally effective amount" refers to that amount of insecticide that will lead to control of a target insect.
The term "control" refers to inhibition, killing or any other interference which disrupts the normal life processes of a target insect in a manner adverse to the insect.

The composition for the treatment of mosquito breeding sites of the invention comprises at least one active ingredient.
This active ingredient is an insecticidal component derived from *Bacillus thuringiensis* M-H-14 and is a delta-endotoxin which is produced by the bacterium under natural and industrial conditions. The production of these delta endotoxins can be performed under a number of conditions which are known in the art. Hereafter a specific preferred method will be described as a second aspect of the invention.

The invention relates to such pesticidal compositions or preparations comprising a *Bacillus thuringiensis* delta-endotoxin product, which pesticidal composition in granules form has at least 18.000 ITU/g.

The composition of the invention further comprises a carrier component which is of crucial importance for the wanted action.

The function of the carrier component is primarily the entrapment or absorption of the active ingredient. Both options of maintaining the active ingredient, entrapping or absorbing, are possible and the character of the interaction between the carrier and the active ingredient depends finally upon the character of the active ingredient itself and the type of carrier used. The interaction of the carrier with the active ingredient will be referred to hereafter as entrapment, however it is not necessary that in all cases a real entrapment is present, in the sense of the active ingredient being at the inside of the carrier, it may just as well be simple absorption, meaning that the active ingredient is found preferentially at the inner and outer surface of the carrier.

The size, molecular weight and other physical characteristics of the carrier can be selected from a fairly broad range. The preferred carrier is a granule with a size of 1 to 10 mm and more preferably between 2 and 5 mm. It may have a ball-like shape or any other suitable shape. The particle size in the suspended formulation can exert considerable influence on the larvicidal efficacy.

The weight of the individual carriers varies between 0.01 and 0.08 g.

The preferred source of the granules is plant material, whereby the precise selection of the source is only dependent on the final effect. Accordingly the carriers are preferably prepared from raw agricultural material.

The most preferred carriers used in the present invention are prepared from peat, corn cobs, corn grain, wheat strain, cork or palm seed grain.

It has turned out, that the granules of plant material source are particularly well ingested by the target insects and retain the activity of the active ingredient for a prolonged period. Furthermore they are particularly suitable to get the floating phenomenon which leads to the excellent availability of the composition. The floating phenomenon is the property of the carriers to stay at or near the surface of the water and not to sink to the lower areas or even to the bottom. It is evident, that this floating prolongs the availability of the carriers for the release of ingestible toxin for the larvae to be killed significantly.

The carrier improves the storage and pourability of the compositions of the invention and facilitates their application to the insect habitats.

Furthermore the carriers prepared from plant material provide the optimum porosity for entrapping the active ingredient and keeping it sufficiently bound to uptain the slow-release effect to be discussed later and on the other hand not binding it too strongly so that the wanted action will take place.

A further advantage of the carriers of plant material is their general excellent availability and low price which is in view of the intended target areas an advantage of high relevance. Insect problems are regularly observed in countries with limited resources and economic and financial aspects play a major role in the realization of measures against insect pests.

The carrier of the invention can for instance be easily prepared from corn cobs which is a preferred source for the carriers of the invention. In this embodiment of the invention mature fresh corn cobs are dried by the application of heat at 60°c, are subsequently crushed and sieved before being used. The corn cob has a uniform porous structure and a density which is lighter than that of water which is an added advantage and enables the carrier to float in the water. The carrier from corn cobs is furthermore characterized by its high porosity which allows a slow release of the entrapped toxin material.

The carriers of plant material have the further advantage of providing a stabilising effect against sunlight influences. This surprising effect provided by the carriers of plant origin turned out to be usually of sufficient strength to avoid the additional use of specific UV protectants. It is for instance in most cases not necessary to provide a UV-protective coating or other comparable measures.

The composition of the invention further comprises a component for the protection against sun-light, or in other words, an ultravioletr light (UV) stabilizer. Preferred ultraviolet light (UV) stabilizer used in the composition of the invention are carbon black, bentonite, kaolin and coral powder. As mentioned herebefore, the carriers of plant material provide an UV protection by themselves, so that usually an additional protection against sunlight is not necessary.

The composition may further comprise organic fillers such as lactose, starch, flows, plant matter, molasses.

The composition of the invention further comprises a feeding filler.
Molasse as filler enhances the feeding affinity of mosquito larvae and improves the water floating ability.

A gastrostimulant such as yeast may be incorporated into the composition as well.

The insecticidal composition of the present invention has such physical characteristics that it can be ingested by a target insect. The insecticidal compositions optionally contain other active agents and/or fillers or other additives which enhance the activity of the composition or impart other desirable characteristics to the composition.

In different formulations, the composition can optimally contain one or more additives in which the additives are present in an amount of from 0.05 to 10 % by weight (based on the total weight of the entire composition).

The insecticidal composition of the present invention has higher water flotation ability as compared to insecticides which are not encapsulated or entrapped.

In preferred compositions of the present invention, the formulation imparts sufficient hydrophobicity or sufficient density modification (or both) to the insecticidal compositions such that the composition has a higher water flotation ability, as compared to the insecticide alone which is not entrapped. This higher flotation ability is particularly advantageous when the target insects are mosquito larvae. The preferred insecticidal composition, because of its higher flotation ability, will remain in the feeding zone of the mosquito larvae longer, and thus, be more efficacious than non-entrapped insecticide. The feeding zone of mosquito larvae will vary from species to species, however, typically the feeding zone is about the upper 10 to 40 centimeters of aquatic environments such as lakes, ponds, pools, salt marshes, and the like.

The process of making the pesticidal compositions comprises contacting a suitable ingestible pesticide with a suitable natural material having the capability of existing in solution or as a dispersion in an aqueous phase thus, as will be explained in more detail hereafter. The carrier and the pesticide have a greater affinity for each other than for the water phase. This affinity which leads to entrapment may be due for example to hydrophobicity, physical attraction, hydrogen bonding and covalent or non-covalent chemical bonding.

The composition of the invention is safe for human beings and does not constitute a hazard for other organisms or the environment.

As already stated previously, it is a second object of the invention to provide an effective method for the preparation of an insecticidal component of improved efficacy and stability.

The second object of the invention has been solved by providing a method comprising the steps of fermenting *Bacillus thuringiensis* M-H-14 in a fermentation reactor until completion of sporulation, separating the solid components from the fermentation reactor by centrifugation to obtain a so-called concentrated cream, and spray-drying the concentrated cream to obtain a wettable powder or diluting the concentrated cream with an aqueous solution to obtain a pourable aqueous solution.

The initial fermentation can be performed using methods known in the art (see for instance Fayaz et al., Med. J. Isl. Rep. Iran, 1988; 2: 229 - 236).
The fermentation proceeds until the sporulation is complete with an average duration of 26.5 hrs. This short duration is partly due to the use of a specific medium. The delta-endotoxins are produced during the sporulation phase of the growth curve of Bacillus thuringiensis M-H-14 and their production can be enhanced by providing a medium which has an ingredient which brings the bateria in a phase of dying. In this death phase of the bacteria the delta-endotxins are produced in significant amounts. The usual preferred medium for culturing Bacillus thuringiensis M-H-14 was as follows:

| Ingredient | Concentration (% by weight) |
|---|---|
| Molasse | 1.6 |
| SCP | 2.04 |
| MgSO₄.7H₂O | 0.12 |
| MnSO₄.H₂O | 0.15 |
| K₂HPO₄ | 0.25 |
| CaCl₂ | 0.13 |

The production is based on the use of cheap raw material available even in developing countries, like beet molasse and corn steep liquor (waste water from glucose and starch factories).

The initial phase of culturing was performed under a dissolved oxygen concentration of 20%. In the logarithmic phase of the growth curve the oxygen concentration was steadily decreased in order to bring the bacteria towards the death phase, forcing them to sporulation and finally delta-endotoxin production. Nutritional elements like Ca, Mg, and Mn play an important role in sporulation and toxin formation. The pH of the culture medium was gradually increased during the growth from 7 to 8.6, the final value being obtained after 26.5 to 28 hours when sporulation was complete and the delta-endotoxin was released.

The product of the fermentation is then centrifuged through a continuous flow centrifuge at a feeding rate of approximately 500 ml/min. As a result of the centrifugation step, approximately 80% of the liquid phase is removed, leading to a final product comprising approximately 20% of the original mass. This residual mass comprises bacterial cell debris, bacterial toxin and water. The product has a creamy look and is called the "concentrated cream".

Proceeding from this concentrated cream there are two ways to obtain an effective formulation of the delta endotoxin.

According to the first method the concentrated cream is dried to become a powder.

Drying of the concentrated cream can be performed by any method which is suitable to remove water and obtain the residual dry components.

It is preferred within the frame of the invention to use a two-step drying method. In the first step of this method the drying conditions are selected such that the enzymes which are responsible for germination are being inactivated.
The conditions of the first step are an inlet temperature of 150 ± 2 °C and an outlet temperature of 80 ± 2 °C.

In the second step of the two-step method the enzymes contained in the preparation are denaturated.

The final powder which is obtained according to this method is wettable, which means that it is easy to prepare a suspension of the powder in an aqueous solution or in the natural situation where the powder is spread on the water surface and is capable of getting below the water surface and be avaible for the ingestion by the insects.

According to the alternative method the concentrated cream is diluted with an aqueous solution to obtain a diluted aqueous solution which is suitable to be poured.
The diluted concentrated cream was thereafter mixed with corn cob and 4%w/w of sterile sugar beet molasse, which acts as filler and has the function of attracting mosquito larvae. The ratio of the toxic compound and the carrier is approximately 1:10.

Both alternative embodiments of the process of the invention have specific advantages. The dry powder is stable and can be stored for a long period without losing any of its insecticidal potential. The advantage of the liquid preparation is its perfect suitability to be added to a natural environment with plants, without losing major parts which are kept by the plant material above the water surface.

The present invention also concerns a method of using the insecticidal compositions described herein for the control of target insects.

The composition of the present invention is a unique slow-release, long-lasting formulation which provides a sustained level activity due to entrapped materials. In a preferred embodiment of the present invention, a composition of *Bacillus thuringiensis* M-H-14 entrapped in a suitable carrier is ingested by a mosquito larvae. Although not to be bound by any particular mode of action, it is believed that the environment within the gut of the larvae, generally an alkaline environment, causes the ingestion of carrier thereby releasing the *Bacillus thuringiensis* M-H-14 toxins from the carrier matrix.

Although conventional *Bacillus thuringiensis* M-H-14 preparations lack recycling and provide no persistent control, their usefulness has been established in an integrated approach toward the control of Anophele stephensis.

Granular formulations in which *Bacillus thuringiensis* M-H-14 are coated upon or incorporated within carriers allow the penetration of canopy and provide an even distribution will extend contact time with surface feeding Anophelines.

In order to control susceptible insects, the compositions are applied to the habitats of the target insect according to known techniques. Such applications can be accomplished mechanically, by air, or by other means known in the art.
The dosages to be used will be determined by, among other things, the insecticide in question, the target insect to be eliminated and the method of application. Typical dosages are about 0.01 to about 10 kilograms of insecticidal composition solids per hectare. In the case of *Bacillus thuringiensis* and *Bacillus thuringiensis israelensis,* about 0.05 to 5 kilograms (kg) of insecticidal composition solids per hectare are typically used.

The compositions formed by the process of the present invention can have varying physical dimensions, attracting larvae or inhibiting and accelerating larvae food intake based an the factors such as size of granules, depth of larvae nests, amount of food available to larvae and its mode of application which are key factors in efficiency of the final products.

Released *Bacillus thuringiensis* toxins then exhibit their insecticidal effect upon the larvae.

Various polysaccharides and cellulolitic matrix were investigated for their ability to entrap *Bacillus thuringiensis* M-H-14.

Incorporating primary powder of *Bacillus thuringiensis* M-H-14 within a matrix that enables both sustained-release of inoculum as well as flotation, may extend residual control in habitats where conditions are not favorable for recycling and/or where the toxin settles from the larval feeding zone.

Slow release formulation of *Bacillus thuringiensis* M-H-14 provided extended control under these conditions and in full sunlight.

Vegetative canopy may impede conventional spray applications of wettable powder and pourable concentrated formulations from reaching target larvae. Granular formulations (in which bacteria are coated upon or incorporated within a carrier) allow penetration of canopy and provide even distribution within the larval habitat. Modifying the carrier to increase flotation will extend contact time with surface feeding species such as the anophelines whereas sinking pellets may be more effective against bottom feeding species.

The pourable concentrate of the *Bacillus thuringiensis* M-H-14 formulation with the smallest mean particle size, settled more slowly than the wettable powders and consequently provided a more prolonged control.

The ingestible pesticides used in the compositions of the present invention are those pesticides that are pesticidally effective in controlling target pests after the target pests have ingested the pesticidal composition. Target pests are those pests capable of ingesting pesticidal compositions. The preferred ingestible biological insecticides for use in the compositions and processes of the present invention can be various microorganisms, such as certain bacteria, fungi and viruses, that are toxic to the mosquitoes larvae.

Final formulation prepared in the form of slow releasing composition in contrast to commercial formulation, this composition remain an the surface of water for 15-25 days. Toxins are released gradually to the water surface were Anophelle larvae are feeding. The amount of released toxin remains constant during the application intervals.

### Examples

### Preparation example 1.

The fermentation of *Bacillus thuringiensis* M-H-14 was performed in a conventional manner.

The concentrated cream which contains the active protein crystals was stabilized by addition of polysaccharide and the pH-value was adjusted to 7.0.

### Preparation example 2.

The concentrated cream obtained according to preparation example 1 was spray dried and later used for the formulation of wettable powder.

The whole process for the preparation of the wettable powder is displayed in the following reaction scheme.

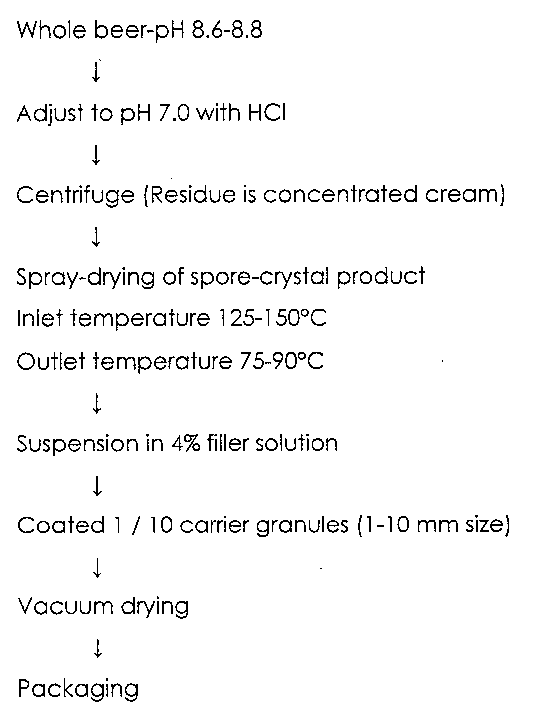

### Preparation example 3.

The concentrated cream obtained according to preparation example 1 was used directly for the preparation of two aqueous pourable concentrates.

### Example 1.

15 g of *Bacillus thuringiensis* M-H-14 wettable powder prepared according to preparation example 2 and 15 g starch prepared in 1000 ml water. Heat treatment was performed to produce microspheres entrapped. After drying the diameter of the particles was between 0.1-1 mm.

Examination with the light microscope revealed that the *Bacillus thuringiensis* M-H-14 material adhered to the surface of the microspheres.

### Example 2.

The concentrated cream obtained according to preparation example 1 containing the active protein crystals of *Bacillus thuringiensis* M-H-14 was added to water to achieve a 2% by weight *Bacillus thuringiensis* M-H-14 dispersion. Lactose was added to the dispersion in 0.5% concentration and palm seed granules were coated with this dispersion. The diameter of particles was between 3-5 mm.

### Example 3.

The concentrated cream obtained according to preparation example 1 containing the active protein crystals of *Bacillus thuringiensis* M-H-14 was added to water to achieve a 2% and 4% dry weight *Bacillus thuringiensis* M-H-14 dispersion. Starch was added to the dispersion in 0.5% concentration and cork granules were coated with this dispersion.

### Example 4.

The concentrated cream obtained according to preparation example 1 was prepared with 0.5% molasse and corn cobs granules were coated. The methods used were substantially as described in examples 2 and 3.

### Example 5.

The wettable powder obtained according to preparation example 2 was added to Bentonite powder to achieve a dry mixture.

### Example 6.

The wettable powder obtained according to preparation example 2 which contains 5% molasse was added to peat powder to achieve a mixture of composition of 1 to 3 w/w respectively.

### Example 7.

The concentrated cream of *Bacillus thuringiensis* M-H-14 obtained according to preparation example 1 was added to water to achieve a 20% dry weight Bacillus thuringiensis M-H-14 dispersion.

Lactose in 0.4% concentration and dried yeast in 0.1 % concentration was added to prepare a floatable concentrate composition.

### Example 8.

The concentrated cream of *Bacillus thuringiensis* M-H-14 obtained according to preparation example 1 was added to water to achieve a 20% dry weight *Bacillus thuringiensis* M-H-14 dispersion. Molasse in 0.5% concentration, flour in 0.1% concentration and black carbon powder as concentration of 1 % and molasse in concentration of 0.1 % was added to prepare a pourable concentrated composition.

In all compositions of examples 1 to 8 the efficiency of *Bacillus thuringiensis* M-H-14 entrapment was estimated by light microscopic and scanning electron microscope examination. The values assigned for the degree of entrapment are shown in table I.

**Table I**

| Result of entrapment of *Bacillus thuringiensis* M-H-14 studies of various compositions | | | |
|---|---|---|---|
| Example | Carrier | Filler | Entrapment Efficiency# |
| (1) Microsphere | - | Starch | +++ |
| (2) Granules | Palm seed | Lactose | +++ |
| (3) Granules | Cork | Starch | ++ |
| (4) Granules | Corn cobs | Molasse | ++++ |
| (5) Wettable powder | Bentonite | Lactose | +++ |
| (6) Wettable powder | Peat powder | Molasse | +++ |
| (7) Flowable concentrate | Dried yeast | Lactose | - |
| (8) Flowable concentrate | Flour + carbon black | Molasse | - |

| | | | |
|---|---|---|---|
| # ++++ : entrapment 70-100% | | | |
| +++ : entrapment 50 -70% | | | |
| ++ : entrapment 20 - 50 % | | | |
| + : entrapment less than 20% | | | |
| - : no detectable entrapment | | | |

### Example 9.

Persistence of the composition of the different formulations according to the art in the mosquito feeding zone was demonstrated in table 2.
Surviving larvae were counted at 24 hr, 5 days, 10 days, 15 days and 20 days after application of different formulations.

**Table 2.**

| Average percentage reduction in Culex and Anopheles larvae, disaggregated by age in an experiment comparing the larvicidal impact of Bactimus powder and tablets with that of gasoline and Abate, in natural larval nests | | | | |
|---|---|---|---|---|
| Larvicide type | Mosquito type | Mosquito age | Average percentage reduction of larvae in natural nests 24hrs after larvicidal activity | Average percentage reduction of larvae in natural nests one week after larvicidal activit |
| Bactimus 0.04 g/m² | Culex | L₂ +L₃ | 77.4 ±4.9 | 20.6 ± 20.9 |
| | | L₃+L₄ | 85 ±1.7 | 25.3 ± 25.8 |
| | | All ages | 79.3 ±4.1 | 21.9 ± 22.3 |
| | Anopheles | L₁+L₂ | 63.7 ±5.9 | 16 ±16.3 |
| | | L₃+L₄ | 79.9 ±4.2 | 13.3 ±13.6 |
| | | All ages | 69.5 ± 3.9 | 15 ±15.3 |
| Gasoline (10cc/cm²) | Culex | L₁+L₂ | 98.8 ± 0.4 | 32.1 ±17.8 |
| | | L₃+L₄ | 99.5 ± 0.5 | 58.7 ±27.1 |
| | | All ages | 99 ± 0.5 | 37.7 ± 21 |
| | Anopheles | L₁+L₂ | 98 ± 0.7 | 29.9 ± 26.3 |
| | | L₃+L₄ | 98.4 ± 1.5 | 45.8 ± 25.8 |
| | | All ages | 98 ± 0.7 | 34 ± 25.7 |
| Abate (0.015cc/m²) | Culex | L₁+L₂ | 99.9 ± 0.05 | 48 ± 27.9 |
| | | L₃+L₄ | 99.9 ± 0.07 | 44.4 ± 29.9 |
| | | All ages | 99.9 ± 0.05 | 47.9 ± 28.1 |
| | Anopheles | L₁+L₂ | 100 | 18 ± 9.9 |
| | | L₃+L₄ | 100 | 47.6 ± 29.5 |
| | | All ages | 100 | 22.4 ±12.6 |
| Control | Culex | L₁+L₂ | 8.8 ±3.7 | 11.1 ±6.1 |
| | | L₃+L₄ | 13.3 ±5.2 | 12.9 ± 6.8 |
| | | All ages | 8.5 ±3.4 | 6 ± 2.8 |
| | Anopheles | L₁+L₂ | 1.7 ±1.7 | 9 ± 4.3 |
| | | L₃+L₄ | 9.3 ±4 | 77 ± 4.5 |
| | | All ages | 2.1 ±2.1 | 4.9 ± 2.5 |

In the table the L1 larvae are the so-called first star larvae, the L2 are the second star larvae, the L3 are the third star larvae and L4 are the four star larvae. They constitute the different phases of the development of the larvae during maturation.

### Example 10.

Queshm Island in Hormozgan province is located in Iran's malaria endemic belt. Its surface is 1.500 square kilometers.

It is the largest Island in the Persian Gulf, with 74 residential villages and a population of 70.000. Its semi-tropical climate is ideal for breeding the deadliest of malaria vectors for 10 months out of the year. *Bacillus thuringiensis* M-H-14 was used to cover the Islands fresh water surface over a two year period.

In Queshm Island the moisture and temperature make an ideal condition for generation of mosquitoes for at least a period of 10 months. Special species Anophele stephensis are quite resistant to chemical insecticides. With respect to the environmental conditions in previous years malaria diseases was distributed all over the area. A special type was Plasmodium falciparum which is resistant to chloroquine. Fortunately the present investigation did not show any case of malaria among the local people. All the private and governmental water reservoirs and dams were treated by *Bacillus thuringiensis* M-H-14. The application lead to 17 days interval field investigations. At the rate of 1.7 kg/ha Bacillus was applied all over the Island and in open sunlight. Solar radiation did not play an effective role in terns of decreasing the level of larvicidal activity.

The slow release formulation eliminated larval population of mosquitoes for over 17 days.
After one hour, and twenty four hours of application 80 to 100% of larvae were respectively destroyed.

The obtained data are displayed in the table 3.

**Table 3.**

| The average reduction in Anopheles larvae, disaggregated according to age, in an evaluation of the impact of 2 g/m² concentration of wettable powder, liquid and slow release granules of *Bacillus thuringiensis* M-H-14 on natural larval nests | | | | |
|---|---|---|---|---|
| Larvicide | Mosquito type | Age of mosquitoes | Larval reduction 24 hs after a lication | Larval reduction 1 week after a lication |
| Bt.M-H-14 Example 1 | Anopheles Stephensis | L₁+L₂ | 68.0 ±0.5 | 28.1 ±0.6 |
| | | L₃+L₄ | 62.7 ±0.5 | 16.2.(±0. |
| | | All ages | 65.4 ±0.3 | 22.15 ±0.7 |
| Bt.M-H-14 Example 2 | Anopheles Stephensis | L₁+L₂ | 96.1 ±0.9 | 25.8 ±6.2 |
| | | L₃+L₄ | 86.8 ±1.5 | 42.2 ± 9.6 |
| | | All ages | 94.7 ±1 | 28.5 ±8.5 |
| Bt.M-H-14 Example 3 | Anopheles Stephensis | L₁+L₂ | 1.7 ±1.7 | 11.3 ±0.5 |
| | | L₃+L₄ | 3.3 ±2.8 | 12.8 ±0.6 |
| | | All ages | 2.1 ±2.1 | 11.5 ±0.8 |
| Bt.M-H-14 Example 4 | Anopheles Stephensis | L₁+L₂ | 99 ±0.2 | 98.4 ±0.6 |
| | | L₃+L₄ | 98.7 ±0.3 | 98.2 ±0.2 |
| | | All ages | 99.4 ±0.3 | 98.3 ±0.8 |
| Bt.M-H-14 Example 5 | Anopheles Stephensis | L₁+L₂ | 98.4 ±0.3 | 26.1 ±3.6 |
| | | L₃+L₄ | 92.7 ±0.2 | 43.2 ±6.2 |
| | | All ages | 98.4 ±0.3 | 25.8 ±0.7 |
| Bt.M-H-14 Example 6 | Anopheles Stephensis | L₁+L₂ | 96.1 ±0.9 | 25.8 ±6.22 |
| | | L₃+L₄ | 86.8 ±1.5 | 42.2 ±1.6 |
| | | All ages | 94.7 ±1 | 28.5 ±0.7 |
| Bt.M-H-14 Example 7 | Anopheles Stephensis | L₁+L₂ | 99 ±2 | 24.1 ±3.6 |
| | | L₃+L₄ | 92.7 ±3 | 40.2 ±6.8 |
| | | All ages | 98.4 ±0.3 | 23.8 ±0.9 |
| Bt.M-H-14 Example 8 | Anopheles Stephensis | L₁+L₂ | 98.2 ±0.3 | 25.2 ±0.2 |
| | | L₃+L₄ | 96.1 ±0.9 | 40.1 ±0.6 |
| | | All ages | 86.7 ±1.5 | 22.5 ±0.5 |
| Bt.M-H-!4: *Bacillus thuringiensis* M-H-14 | | | | |

During the 17 days of experimental work the frequency of L2, L3 and L4 larvae and pupae was zero, which is a good indication of long-term effect of remaining *Bacillus thuringiensis* M-H-14. The high frequency of L₁ larvae obtained could be due to continuous egg laying of mosquitoes, and in the first few hours after hatching, the larvae are not feeding, hence, the frequency of L₁ will be increasing (high).

Slow release formulations have provided excellent control (100%) of larvae at the rates of 1.7 kg/ha. *Bacillus thuringiensis* M-H-14 against Anopheles species are indeed limited in scope. Only a few species and situations have been investigated. Most of the studies to date were controlled at 0.5-6 kg/ha of the concentrated formulations (Dame et al., 1981; Lacey 1985; Majori, Ali and Sabatinelli 1987), although in some cases the rates of formulations were as high as 19.1 kg/ha.

In a private area a malaria control programs was performed by local people. About 10 g of slow release formulated product (SRFP) was packed and distributed among people. Social workers trained the women, and children of each house in order to use the SRFP in their water ponds and reservoirs.
Local people gained experience and as soon as the powder was over, they were collecting it from Island Health Centers.

*Bacillus thuringiensis* M-H-14 was field tested in the southern provinces over a four year period and its economic feasibility has been proven with the Queshm experience.

All the composition prepared exhibited the majority of the activity, killing 100 % of the larvae after 24 hours, some of the formulations after 72 hours precipitated at the bottom of the mosquitoes breeding sites.

Various concentration and particle sizes of carriers were tested for their ability to entrap *Bacillus thuringiensis* M-H-14 and floatability.

The bacterial insecticide compositions according to examples 1, 2 and 4 which comprise granules composition in a slow-release, entrapped toxin formulation are highly effective in the feeding zone of mosquitoes.
The granular form of example 4 clearly shows that this slow-release floatable form releases the toxin at a constant concentration and with long-term effectiveness at the breeding sites of mosquito larvae.

## Claims

1. Composition for the treatment of mosquito breeding site against mosquito larvae,
comprising
an insecticidal component derived from *Bacillus thuringiensis*
M-H-14,
a carrier component,
a component for the protection against sun-light and optionally feeding filler and excipients.

2. Composition of claim 1 wherein the bactericidal component derived from *Bacillus thuringiensis* M-H-14 is a delta-endotoxin.

3. The composition of claim 1 or 2, wherein the carrier is in the form of a granule.

4. The composition of claim 3, wherein the granule is of plant origin.

5. Composition of any of claims 1 to 4, wherein the carrier consists of particles with a diameter of between 1 and 10 mm prepared from a basic material selected form the group consisting of peat, corn cobs, corn grain, wheat strain, cork and palm seed grain.

6. Composition of any of the previous claims, wherein the component for the protection against sun-light is selected form the group consisting of carbon black, bentonite, kaolin and coral powder.

7. Method for preparing a insecticidal component,
comprising the steps of
fermenting *Bacillus thuringiensis* M-H-14 in a fermentation reactor until completion of sporulation,
separating the solid components from the fermentation reactor by centrifugation to obtain a concentrated cream,
spray-drying the concentrated cream to obtain a wettable powder or
diluting the concentrated cream with an aqueous solution to obtain a pourable aqueous solution.

8. Method for the preparation of the composition of claim 1 whereby the diluted concentrated cream obtained as defined in claim 7 is mixed with a carrier component and with a filler.

9. The method of claim 8, whereby the filler is 4%w/w sterile sugar beet molasse.

10. The method of claim 8 or 9, whereby the ratio by weight of concentrated cream to carrier is 1:10.

11. Concentrated cream obtained as the intermediate product in the method of claim 7.
